# EUROPÄISCHE PATENTSCHRIFT

(11) **EP 2 530 336 B1**
(45) Veröffentlichungstag und Bekanntmachung des Hinweises auf die Patenterteilung: **25.06.2014**
(21) Anmeldenummer: 11004480.7
(22) Anmeldetag: 01.06.2011
(51) Int. Cl.: F16B 5/02

(54) **Vorrichtung zum Abstützen von Bauteilen**
Device for supporting components
Dispositif de soutien de composants

(43) Veröffentlichungstag der Anmeldung: 05.12.2012
(73) Patentinhaber: SMP Deutschland GmbH, 79268 Bötzingen (DE)
(72) Erfinder: Steininger, Johannes, 85088 Vohburg (DE); Vollet, Heinz, 90469 Nürnberg (DE); Otto, Peter, 22869 Schenefeld (DE); Gut, Dieter, 79235 Oberbergen (DE); Werner, Martin, 85116 Egweil (DE); Hanschick, Heinz, 91757 Treuchtlingen (DE)
(74) Vertreter: Patentanwälte Westphal, Mussgnug & Partner

(56) Entgegenhaltungen:
- WO-A1-2011/052661
- DE-U1-202010 003 368
- FR-A1- 2 675 219
- FR-A1- 2 761 127
- FR-A1- 2 896 020
- FR-A5- 2 074 351
- GB-A- 1 477 465
- GB-A- 2 344 136
- US-A- 4 386 949
- US-A- 4 898 493
- US-A- 5 178 501

## Beschreibung

Die vorliegende Erfindung betrifft eine Vorrichtung zum Abstützen eines ersten Bauteils an einem zweiten Bauteil mit selbsttätigem Ausgleich von fertigungs- und montagebedingten Toleranzen zwischen den beiden Bauteilen.

Es sind zahlreiche Vorrichtungen bekannt, mit deren Hilfe Bauteile aneinander angeglichen werden, wobei diese Vorrichtungen insbesondere in der Möbel- oder Automobilindustrie Anwendung finden, wo großflächige Bauteile mit optisch einwandfreien Fugen zueinander angeordnet werden müssen. Derartige Vorrichtungen werden beispielsweise in der DE 10 2004 050 625 A1, der DE 10 2006 040 759 B3 oder der DE 10 2005 044 064 A1 beschrieben. Die in den oben genannten Dokumenten beschriebenen Vorrichtungen werden dazu genutzt, um zwei Bauteile relativ zueinander einzustellen und die gewählte Einstellung zu sichern. Als Abstützvorrichtungen, insbesondere wenn es darum geht, das erste Bauteil an einem zweiten Bauteil abzustützen, um ein Absinken oder Absetzen des ersten Bauteils zu verhindern und damit den Abstand des ersten Bauteils zu einem dritten Bauteil auch nach Dauerbelastung zu garantieren, um beispielsweise einen einwandfreien Fugenverlauf zwischen dem ersten und dem dritten Bauteil auf Dauer zu gewährleisten, sind die oben genannten Einstellvorrichtungen nicht geeignet.

In dem von der Amelderin angemeldeten Gebrauchsmuster DE 20 2010 003 368 wird eine Vorrichtung zum Abstützen mit selbsttätigem Ausgleich von fertigungs- oder montagebedingten Toleranzen Innenverkleidung eines Kühlergrills beschrieben. Dabei besteht die Vorrichtung aus einem Aufnahmeelement und einem Verstellelement, wobei das Verstellelement zumindest teilweise als Gewindestange ausgebildet ist und an seinem ersten mit einem Außengewinde versehenen oberen Ende eine Bohrung zur Aufnahme einer Verstellschraube aufweist, während an seinem zweiten unteren Ende eine Abstützfläche angeordnet ist. Das Aufnahmeelement ist zur Aufnahme des Verstellelements vorgesehen und besitzt dafür eine durchgehende Bohrung, die zumindest teilweise mit einem Innengewinde ausgestattet ist.

Ein Nachteil dieser Anordnung besteht darin, dass die Vorrichtung einen relativ komplizierten Einstellmechanismus aufweist, bei dem nicht nur zwei Bauteile über Gewinde miteinander kombiniert werden, sondern die Gewindegänge eines der Bauteile auch teilweise noch Verzahnungen aufweisen, in die am Bauteilgegenstück angeordnete Zähne eingreifen. Es hat sich herausgestellt, dass es bei dieser Anordnung häufig zu einer Verdrehung oder einem Verzug des Verstellelements kommt, wodurch der Ausgleich zwischen den Bauteilen erschwert wird.

Es besteht somit weiterhin das Problem, eine Vorrichtung zu finden, die die Nachteile des Standes der Technik nicht aufweist und insbesondere dafür geeignet ist, ein erstes Bauteil an einem zweiten Bauteil mit selbsttätigem Ausgleich von fertigungs- und montagebedingten Toleranzen abzustützen, um auf diese Weise ein Absinken oder Absetzen des ersten Bauteils zu verhindern und damit die Anordnung des ersten Bauteils relativ zu einem dritten Bauteil auch bei einer Dauerbelastung zu sichern.

Gelöst wird die Aufgabe durch eine Vorrichtung mit den Merkmalen des Anspruchs 1. Vorteilhafte Ausgestaltungen und Weiterentwicklungen der Vorrichtung sind Gegenstand der Unteransprüche.

Die erfindungsgemäße Vorrichtung zum Abstützen eines ersten Bauteils an einem zweiten Bauteil ist so konzipiert, dass ein selbsttätiger Ausgleich von fertigungs- und montagebedingten Toleranzen zwischen den beiden Bauteilen beim Einsatz der Vorrichtung stattfindet. Dabei besteht die Vorrichtung aus einem Aufnahmeelement und einem Verstellelement, wobei das Verstellelement als Verstellbolzen ausgebildet ist und an seinem oberen Ende eine Bohrung zur Aufnahme eines Fixierelementes aufweist, während an seinem unteren Ende eine Abstützfläche angeordnet ist. Das Fixierelement ist vorzugsweise eine Fixierschraube, die bei der Montage in die Bohrung des Verstellelements eingedreht wird. Das Aufnahmeelement umfasst eine durchgehende Bohrung zur Aufnahme des Verstellelements, wobei das Verstellelement mindestens eine Verdrehsicherung aufweist, die auf die Bohrung des Aufnahmeelements abgestimmt ist. Bei einer vorteilhaften Ausgestaltung der Erfindung handelt es sich bei der Verdrehsicherung um mindestens eine ebene Schlüsselfläche, die am Verstellbolzen ausgebildet ist und zusammen mit einer korrespondierenden Schlüsselfläche in der Bohrung des Aufnahmeelements ein Verdrehen des Verstellelements verhindert.

Das Funktionsprinzip der Vorrichtung beruht darauf, dass das Aufnahmeelement entweder fest mit dem abzustützenden ersten Bauteil verbunden ist oder sogar Teil des abzustützenden ersten Bauteils ist. Im ersten Fall ist die Vorrichtung als separates Bauteil ausgebildet und über das Aufnahmeelement mit dem abzustützenden ersten Bauteil verbunden. Die Verbindung zum zweiten Bauteil erfolgt über die Abstützfläche des Verstellelements, die zur Auf- bzw. Anlage auf dem stützenden zweiten Bauteil vorgesehen ist. So kann beispielsweise die Vorrichtung zum Abstützen mit einer entsprechenden abzustützenden Innenverkleidung verbunden oder auch ein Teil dieser Innenverkleidung sein.

Im oberen Bereich des Verstellelements, im Bereich der Bohrung für die Fixierschraube oder das Fixierelement, sind vorzugsweise symmetrisch über den Radius des Verstellelements verteilte Längsschlitze vorgesehen, die bei entsprechendem Eindringen des Fixierelements ins Bohrloch ein Aufspreizen des Verstellelements in diesem Bereich ermöglichen, womit die Fixierung des Verstellelements verwirklicht wird. Neben Schrauben sind dabei als Fixierelemente auch Spreizstifte denkbar, die in die Bohrung am Verstellelement eingedrückt werden.

Sowohl Verstellelement als auch Aufnahmeelement sind üblicherweise aus einem thermoplastischen Kunststoff gefertigt, wobei in diesem Zusammenhang erwähnt werden soll, dass die Vorrichtung generell vor allem für den Einsatz bei Bauteilen aus Kunststoff vorgesehen ist.

Als Fixierschraube ist vorzugsweise eine Metallschraube vorgesehen, die in die Bohrung am oberen Ende des Verstellelementes eingreift und vorteilhaft ein kunststoffgerechtes bzw. symmetrisches Gewinde aufweist, während die Spitze der Verstellschraube vorzugsweise ohne Gewinde, in Form einer Spitze eines Nagels ausgebildet ist.

Im Anlieferungszustand ist der Verstellbolzen in einer Art Vormontageposition in das Aufnahmeelement eingesteckt, wobei erfindungsgemäß für den Verstellbolzen eine Transportsicherung vorgesehen ist, durch die ein Verlorengehen des Verstellbolzens bei der Anlieferung verhindert werden soll.

Bei einer erfindungsgemäßen Ausgestaltung für die Transportsicherung weist der Verstellbolzen eine Rasttasche auf, in die ein als Transportsicherung vorgesehenes an dem Aufnahmeelement angeordnetes Rastelement eingreift. Oberhalb der Rasttasche ist eine bis zur Krone des Verstellbolzens durchgehende vertikal verlaufende Entlastungsnut vorgesehen. Rasttasche und Entlastungsnut sind über eine rampenförmige Barriere voneinander getrennt.

Die Funktionsweise der Abstützvorrichtung beruht darauf, dass das Verstellelement in das Aufnahmeelement, das eine durchgehende Bohrung aufweist, eingedrückt wird, wobei das Rastelement über die Barriere in die Entlastungsnut verschoben wird. Die Barriere weist vorzugsweise einen Rampenwinkel von ca. 45° auf. Das Aufnahmeelement ist dabei fest mit dem abzustützenden ersten Bauteil verbunden bzw. ist ein Teil des abzustützenden ersten Bauteils. Durch das Eindrücken des Verstellbolzens wird die Abstützfläche, die an dem unteren Ende des Verstellelementes angeordnet ist, auf dem stützenden zweiten Bauteil zur Anlage gebracht. Nun wird die Verstellschraube in die Bohrung am oberen Ende des Verstellelements eingedreht. Da der Reibschluss des Verstellelementes mit der Abstützfläche auf dem stützenden Bauteil größer ist als der der Schraube in der Bohrung wird die Schraube bis zum Klemmbereich in den Verstellbolzen eingedreht. Der Klemmbereich ist durch symmetrisch über den Radius des Verstellbolzens verteilte Längsschlitze charakterisiert, die ein Aufspreizen des Verstellelementes in diesem Bereich und damit die Fixierung des Verstellelementes ermöglichen.

Konstruktionsbedingt erzeugt diese Art der Abstützung eine Vorspannung zwischen den beiden Bauteilen. Dies wird häufig gewünscht, um beispielsweise im Vorfeld dem unerwünschten Setzverhalten von Kunststoffteilen entgegenzuwirken. Sollte dagegen eine hohe Vorspannung unerwünscht sein, so kann bei einer vorteilhaften Ausgestaltung der vorliegenden Erfindung durch direktes Aufrauen der Oberfläche der Abstützfläche der Reibschluss zwischen Abstützfläche und dem zweiten Bauteil erhöht werden. Neben dem Aufrauen kann die Klemmung zwischen den Bauteilen auch geeignete Werkstoffpaarungen, Beschichtungen oder mechanische Hinterschnitte erhöht werden.

Ein Beispiel für eine vorteilhafte Anwendung der vorliegenden Erfindung ist die Abstützung eines mit einem Kühlerschutzgitter kombinierten Stoßfängers im Frontendbereich eines Fahrzeugs. Hier werden hohe Anforderungen an das optische Erscheinungsbild gestellt, die beispielsweise ihren Ausdruck darin finden, dass das Kühlerschutzgitter sich auch bei einer Dauerbelastung maximal um einen vorgegebenen Wert absenken darf. Im Rahmen der vorliegenden Arbeiten wurde gefunden, dass mit Hilfe der erfindungsgemäßen Abstützvorrichtung die Lastenheftvorgaben für diesen Montagebereich problemlos erfüllt werden können, wobei die Abstützvorrichtung den zusätzlichen Vorteil hat, dass sie kostengünstig herstellbar ist, keine zusätzlichen Justier- oder Einstellvorgänge für den Fahrzeughersteller bedingt und vor allem auch keine Verschlechterung der gesetzlichen Anforderungen insbesondere in Bezug auf Fußgängerschutz mit sich bringt. Dadurch, dass die Abstützvorrichtung nur mit dem abzustützenden ersten Bauteil, nämlich dem Kühlerschutzgitter, fest verbunden ist, und auf dem Querträger lediglich aufsitzt, ist im Falle eines Aufpralls eine Verschiebung auf dem Querträger möglich, sodass durch die Abstützvorrichtung kein zusätzlicher Widerstand aufgebaut wird, auf Grund dessen der Fußgängerschutz eventuell gemindert werden könnte.

Zwar wurde die erfindungsgemäße Vorrichtung primär für den Einsatz im Automobilbereich entwickelt und kann besonders vorteilhaft im Frontendbereich eingesetzt werden, um die dort eingesetzten sichtbaren Bauteile, wie z. B. Kühlergrill oder Stoßfänger relativ zu weiteren Bauteilen einzustellen und zu fixieren. Darin ist jedoch keine Einschränkung zu sehen, denn die erfindungsgemäße Abstützvorrichtung kann allgemein dort vorteilhaft eingesetzt werden, wo ein erstes Bauteil an einem zweiten Bauteil abgestützt werden soll, um dadurch die relative Lage zueinander bzw. zu einem dritten Bauteil sicherzustellen und zu fixieren.

Im Folgenden wird die vorliegende Erfindung anhand von Zeichnungen ausführlich erläutert. Dabei zeigen
- Fig. 1: eine Schnittdarstellung eines Ausschnitts aus dem Frontendbereich eines Kraftfahrzeugs,
- Fig. 2: eine Schnittdarstellung eines Ausschnitts der erfin-dungsgemäßen Abstützvorrichtung,
- Fig. 2a: eine Darstellung des Schnittes in der Ebene A-A aus Figur 2,
- Fig. 3: eine perspektivische Darstellung eines Ausschnittes der erfindungsgemäßen Vorrichtung und
- Fig. 3a: eine schematische Darstellung des Profils des Schnit-tes der Ebene A-A aus Figur 3.

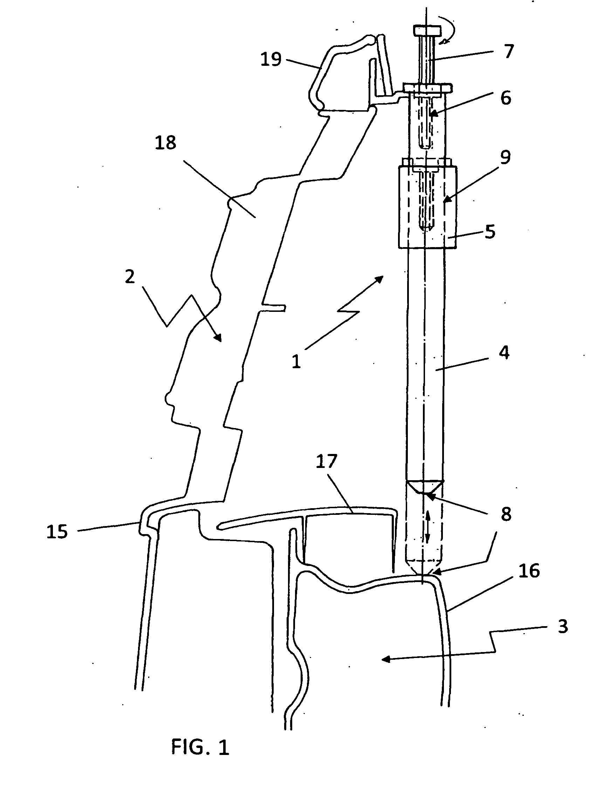

In der Figur 1, die eine Schnittdarstellung eines Teilbereichs einer Frontendstruktur eines Kraftfahrzeugs wiedergibt, ist das Funktionsprinzip der erfindungsgemäßen Abstützvorrichtung 1 anhand eines Kühlergrills 15, 18 als abzustützendes erstes Bauteil 2 und einem Stoßfängerquerträger 16 als stützendes zweites Bauteil 3 dargestellt. Die Abstützvorrichtung 1 besteht im Wesentlichen aus einem Verstellelement 4 und einem Aufnahmeelement 5. Bei der in Figur 1 gewählten Darstellung sind zwei Positionen der Abstützvorrichtung 1 zu sehen, wobei die mit durchgehender Linie gezeichnete Position dem Zustand der Abstützvorrichtung 1 vor ihrem Einsatz entspricht. In der durchgehend gezeichneten Position ragt das obere Ende des Verstellelements 4 aus dem Aufnahmeelement 5 heraus. Auf dem oberen Ende des Verstellelements 4 sitzt eine Fixierschraube 7, die bei Inbetriebnahme der Abstützvorrichtung in die Bohrung 6 im oberen Bereich des Verstellelements 4 eingeschraubt wird.

Durch das Eindrücken des Verstellbolzens 4 in das Aufnahmeelement 5 kommt die Auflagefläche 8 auf dem stützenden zweiten Bauteil 3 zur Anlage. Dieser Zustand ist bei der vorliegenden Darstellung mit unterbrochener Linie dargestellt. Ein Durchdrücken des Verstellelementes durch die Bohrung 9 des Aufnahmeelementes 5 wird dadurch verhindert, dass die Krone 21 des Verstellbolzens 4 einen größeren Durchmesser aufweist als die Bohrung 9 des Aufnahmeelementes 5. Die Fixierschraube 7 wird in dieser Position vollständig in das Verstellelement 4 eingedreht, was ebenfalls bei der Figur 1 gestrichelt wiedergegeben ist.

Im Folgenden soll nur noch kurz auf übrigen bei dieser Darstellung gezeigten Bauteile eingegangen werden, während die Funktionsweise der erfindungsgemäßen Vorrichtung an den nachfolgenden Figuren erläutert wird. So ist in dieser Darstellung darüber hinaus noch ein Chromrahmen 19 zu sehen, der als drittes Bauteil anzusehen ist, zu dem das erste abzustützende Bauteil 2 relativ ausgerichtet werden soll. Mit Hilfe der erfindungsgemäßen Abstützvorrichtung 1 gelingt es nun, ein Absetzen oder Absinken des ersten abzustützenden Bauteils 2, nämlich des Kühlerschutzgitters 18, auch bei Dauerbelastung relativ zu einem dritten Bauteil zu verhindern. Neben dem Chromrahmen 19 ist in der gewählten Darstellung noch eine Abdeckung 17 für den Stoßfängerquerträger 16 zu sehen, der als stützendes zweites Bauteil 3 fungiert.

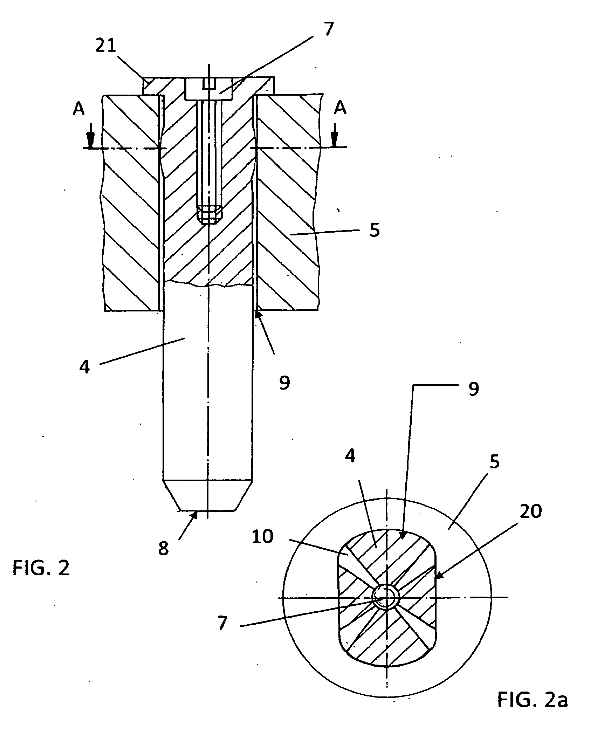

Die Figur 2 zeigt einen Längsschnitt durch einen Teilbereich der erfindungsgemäßen Abstützvorrichtung 1, anhand dessen die Funktionsweise der Vorrichtung erläutert werden soll. Das Verstellelement 4 ist als Verstellbolzen 4 ausgebildet, der im Zustand der Fertigmontage in das Aufnahmeelement 5 eingeführt ist und dort durch Eindrehen der Fixierschraube 7, die ein Spreizen des Verstellbolzens 4 bewirkt, fixiert wird. Um das Spreizen des Verstellbolzens 4 zu ermöglichen, sind im oberen Bereich des Verstellbolzens 4 Längsschlitze 10 angeordnet, die in der Schnittdarstellung Figur 2a durch die Ebene A-A aus Figur 2 zu erkennen sind. Ein Verdrehen des Verstellbolzens 4 wird bei der in der Figur 2 ausgewählten Darstellung dadurch verhindert, dass der Bolzen nicht rund ausgeführt ist, sondern über Schlüsselflächen 20 verfügt, die an korrespondierenden Flächen in der Bohrung 9 anliegen.

Bei der Schnittdarstellung in der Ebene A-A, die in der Figur 2a wiedergeben ist, ist zu erkennen, dass die Flächen des Verstellbolzens 4 aufgrund der Spreizung in diesem Bereich direkt an de Wänden des Aufnahmeelements 5 anliegen, wodurch die Fixierung des Verstellelements 4 und damit der Bauteile 2, 3 untereinander bewirkt wird.

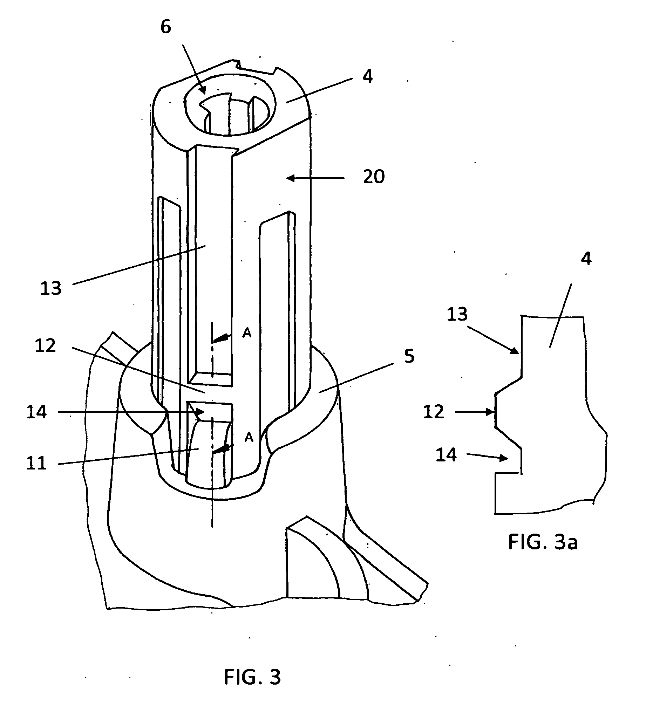

Die Figur 3 zeigt in einer perspektivischen Darstellung eines Ausschnitts der erfindungsgemäßen Abstützvorrichtung eine weitere vorteilhafte Ausgestaltung, wobei der Anlieferungszustand der Baueinheit wiedergegeben ist, bei dem das Verstellelement 4 in die Bohrung 9 des Aufnahmeelements 5 eingesteckt ist und dort mit Hilfe eines Rastelements 11, das in eine Rasttasche 14 am Verstellelement 4 eingreift, fixiert ist. Diese Anordnung dient als Transportsicherung für das Bauteil und verhindert, dass der Verstellbolzen 4 bei der Anlieferung verlorengeht. Bei der Montage wird der Verstellbolzen 4 in die Bohrung 9 im Aufnahmeelement 5 eingedrückt, wobei das Rastelement 11 über die Barriere 12 in die Entlastungsnut 13 überführt wird, die sich vertikal bis zum oberen Ende des Verstellbolzens erstreckt.

Die Funktionsweise der Sicherung wird zusätzlich anhand eines Schnittes durch die Ebene A-A aus Figur 3 erläutert, der in der Figur 3a schematisch als Profil wiedergegeben ist. Bei dieser Darstellung erkennt man die Rasttasche 14 im Verstellbolzen 4 aus der das Rastelement 11, das hier nicht eingezeichnet ist, über die Rampe der Barriere 12 in die Entlastungsnut 13 überführbar ist.

Es soll darauf hingewiesen werden, dass die oben angeführten Beispiele ausschließlich zur Erklärung der Funktionsweise der Abstützvorrichtung gedacht sind und keinesfalls als Einschränkung zu sehen sind. So kann beispielsweise ein Durchdrücken des Verstellbolzens 4 auch dadurch verhindert werden, dass der Durchmesser des Schraubenkopfes größer ist als der Durchmesser der Bohrung 9.

Weitere Varianten einzelner Details ergeben sich für den Fachmann aufgrund seines Fachwissens und sollen hier im Einzelnen nicht mehr aufgeführt werden.

### Bezugszeichenliste

- 1: Abstützvorrichtung
- 2: Erstes Bauteil
- 3: Zweites Bauteil
- 4: Verstellelement (Verstellbolzen)
- 5: Aufnahmeelement
- 6: Bohrung
- 7: Fixierelement (Fixierschraube)
- 8: Abstützfläche
- 9: Bohrung
- 10: Längsschlitz
- 11: Rastelement
- 12: Barriere
- 13: Entlastungsnut
- 14: Rasttasche
- 15: Kühlergrill
- 16: Stoßfängerquerträger
- 17: Abdeckung
- 18: Kühlergrill
- 19: Chromrahmen
- 20: Schlüsselflächen
- 21: Krone

## Patentansprüche

1. Vorrichtung (1) zum Abstützen eines ersten Bauteils (2) an einem zweiten Bauteil (3) mit selbsttätigem Ausgleich von fertigungs- und montagebedingten Toleranzen zwischen den beiden Bauteilen (2, 3), wobei die Vorrichtung (1) ein an einem ersten, oberen Ende eine Bohrung (6) zur Aufnahme eines Fixierelementes (7) und an einem zweiten, unteren Ende eine Abstützfläche (8) aufweisendes Verstellelement (4) sowie ein eine durchgehende Bohrung (9) aufweisendes Aufnahmeelement (5), welches das Verstellelement (4) aufnimmt,
wobei das Verstellelement (4) als mindestens eine Verdrehsicherung aufweisender Verstellbolzen (4) ausgeführt ist, wobei der Verstellbolzen (4) im Bereich der Bohrung (6) zur Aufnahme des Fixierelementes (7) symmetrisch über den Radius des Verstellbolzens (4) verteilte vertikal verlaufende Längsschlitze (10) aufweist,
wobei die Vorrichtung (1) als separates Bauteil ausgebildet und über das Aufnahmeelement (5) mit dem abzustützenden ersten Bauteil (2) fest verbindbar ist, oder
das Aufnahmeelement (5) Teil des abzustützenden ersten Bauteils (2) ist,
**dadurch gekennzeichnet, dass**
für den Verstellbolzen (4) eine Transportsicherung vorgesehen ist, durch die ein Verlorengehen des Verstellbolzens bei der Anlieferung des Bauteils verhindert wird, dass der Verstellbolzen (4) eine Rasttasche (14) aufweist, in die im Anlieferungszustand ein an dem Aufnahmeelement (5) angeordnetes, als Transportsicherung vorgesehenes Rastelement (11) eingreift, und
dass oberhalb der Rasttasche (14) eine bis zu einer Krone (21) des Verstellbolzens (4) durchgehende, vertikal verlaufende Entlastungsnut (13) vorgesehen ist, von der das Rastelement (11) im Montagezustand aufgenommen wird, wobei zwischen Rasttasche (14) und Entlastungsnut (13) eine rampenförmige Barriere (12) vorgesehen ist.

2. Vorrichtung nach Anspruch 1,
**dadurch gekennzeichnet, dass** der Verstellbolzen (4) mindestens eine ebene Schlüsselfläche (20) als Verdrehsicherung aufweist.

3. Vorrichtung nach einem der Ansprüche 1 oder 2,
**dadurch gekennzeichnet, dass** die Abstützfläche (8) des Verstellelements (4) zur Auf- bzw. Anlage auf dem stützenden zweiten Bauteil (3) vorgesehen ist.

4. Vorrichtung nach einem der Ansprüche 1 bis 3,
**dadurch gekennzeichnet, dass** die rampenförmige Barriere (12) einen Rampenwinkel von ca. 45° aufweist.

5. Vorrichtung nach einem der Ansprüche 1 bis 4,
**dadurch gekennzeichnet, dass** eine Eintauchsicherung für den Verstellbolzen (4) vorgesehen ist, indem der Durchmesser der Krone (21) des Verstellbolzens (4) oder der Durchmesser des Kopfes des Fixierelements (7) größer ist als der Innendurchmesser der durchgehenden Bohrung (9) des Aufnahmeelements (5).

6. Vorrichtung nach einem der Ansprüche 1 bis 5,
**dadurch gekennzeichnet, dass** sowohl das Aufnahmeelement (5) als auch das Verstellelement (4) aus einem thermoplastischen Kunststoff gefertigt sind.

7. Vorrichtung nach einem der Ansprüche 1 bis 6,
**dadurch gekennzeichnet, dass** das Fixierelement (7) als Fixierschraube (7) ausgeführt ist.

8. Vorrichtung nach Anspruch 7,
**dadurch gekennzeichnet, dass** die Fixierschraube (7) eine Metallschraube mit einem kunststoffgerechten bzw. metrischen Gewinde ist, wobei die Spitze der Fixierschraube (7) ohne Gewinde in Form einer Nagelspitze ausgebildet ist.

9. Vorrichtung nach einem der Ansprüche 1 bis 8,
**dadurch gekennzeichnet, dass** die Klemmung zwischen der Abstützfläche (8) und dem abstützenden Bauteil (3) durch geeignete Maßnahmen erhöht ist.

10. Vorrichtung nach einem der Ansprüche 1 bis 9,
**dadurch gekennzeichnet, dass** das abzustützende erste Bauteil (2) und das stützende zweite Bauteil (3) jeweils Karosseriebauteile für ein Kraftfahrzeug sind.

11. Vorrichtung nach Anspruch 10,
**dadurch gekennzeichnet, dass** das abzustützende erste Bauteil (2) ein Kühlergrill (15, 18) ist und das stützende zweite Bauteil (3) ein Stoßfängerquerträger (16) ist.

12. Vorrichtung nach Anspruch 8,
**dadurch gekennzeichnet, dass** das abzustützende erste Bauteil (2) ein mit einem Kühlerschutzgitter kombinierter Stoßfänger ist.

## Claims

1. An apparatus (1) for supporting a first component (2) on a second component (3) with automatic compensation of production and assembly tolerances between the two components (2, 3), wherein the apparatus (1) [comprises?] an adjustment element (4) having a bore (6) for receiving a fixing element (7) on a first, upper end and a support face (8) on a second, lower end as well as a receiving element (5) which has a continuous bore (9) and which receives the adjustment element (4),
wherein the adjustment element (4) is designed in the form of at least [one] adjustment pin (4) having a rotation prevention means, wherein the adjustment pin (4) has longitudinal slots (10) extending vertically and distributed symmetrically over the radius of the adjustment pin (4) in the region of the bore (6) for receiving the fixing element (7),
wherein the apparatus (1) is designed in the form of a separate component and is capable of being connected in a fixed manner by way of the receiving element (5) to the first component (2) to be supported, or the receiving element (5) is part of the first component (2) to be supported, **characterized in that** a conveying securing means, by which the loss of the adjustment pin (4) during the delivery of the component is prevented, is provided for the adjustment pin,
the adjustment pin (4) has a catch recess (14) into which a catch element (11) arranged on the receiving element (5) and provided as the conveying securing means engages in the delivery state, and
a relief groove (13), which is continuous as far as a crown (21) of the adjustment pin (4) and which extends vertically and by which the catch element (11) is received in the assembled state, is provided above the catch recess (14), wherein a ramp-shaped barrier (12) is provided between the catch recess (14) and the relief groove (13).

2. An apparatus according to claim 1, **characterized in that** the adjustment pin (4) has at least one flat key face (20) as the rotation prevention means.

3. An apparatus according to one of claims 1 or 2, **characterized in that** the support face (8) of the adjustment element (4) is provided for support or abutment on the supporting second component (3).

4. An apparatus according to any one of claims 1 to 3, **characterized in that** the ramp-shaped barrier (12) has a ramp angle of approximately 45°.

5. An apparatus according to any one of claims 1 to 4, **characterized in that** a penetration prevention means is provided for the adjustment pin (4) **in that** the diameter of the crown (21) of the adjustment pin (4) or the diameter of the head of the fixing element (7) is greater than the internal diameter of the continuous bore (9) of the receiving element (5).

6. An apparatus according to any one of claims 1 to 5, **characterized in that** both the receiving element (5) and the adjustment element (4) are produced from a thermoplastic plastics material.

7. An apparatus according to any one of claims 1 to 6, **characterized in that** the fixing element (7) is designed in the form of a fixing screw (7).

8. An apparatus according to claim 7, **characterized in that** the fixing screw (7) is a metallic screw with a thread appropriate for plastics materials or a metric thread, wherein the tip of the fixing screw (7) is designed without a thread in the form of a nail tip.

9. An apparatus according to any one of claims 1 to 8, **characterized in that** the clamping between the support face (8) and the supporting component (3) is increased by suitable means.

10. An apparatus according to any one of claims 1 to 9, **characterized in that** the first component (2) to be supported and the supporting second component (3) are in each case bodywork components for a motor vehicle.

11. An apparatus according to claim 10, **characterized in that** the first component (2) to be supported is a radiator grille (15, 18) and the supporting second component (3) is a cross member of a bumper.

12. An apparatus according to claim 8, **characterized in that** the first component (2) to be supported is a bumper combined with a radiator protection grille.

## Revendications

1. Dispositif (1) permettant à un premier composant (2) de s'appuyer sur un second composant (3) avec compensation automatique des tolérances liées à la fabrication et au montage entre les deux composants (2, 3), ce dispositif (1) comprenant un élément de réglage (4) comportant à sa première extrémité supérieure un perçage (6) de réception d'un élément de fixation (7) et à sa seconde extrémité inférieure, une surface d'appui (8), ainsi qu'un élément de réception (5) comportant un perçage traversant (9) qui reçoit l'élément de réglage (4),
l'élément de réglage (4) étant réalisé sous la forme d'au moins un boulon de réglage (4) à sécurité anti-rotation, ce boulon de réglage (4) comportant dans la zone du perçage (6) de réception de l'élément de fixation (7), une fente longitudinale (10) s'étendant verticalement, subdivisée symétriquement sur le rayon du boulon de réglage (4),
le dispositif (1) étant réalisé sous la forme d'un composant indépendant et pouvant être relié solidairement au premier composant (2) à supporter par l'élément de réception (5), ou, l'élément de réception (5) étant une partie du premier composant (2) à supporter,
**caractérisé en ce que**
pour le boulon de réglage (4) il est prévu une fixation de sécurité pour le
transport permettant d'éviter une perte de ce boulon de réglage lors de la livraison du composant,
le boulon de réglage (4) comporte une poche d'encliquetage (14) dans laquelle vient en prise à l'état de livraison un élément d'encliquetage (11) constituant la fixation de sécurité pour le transport monté sur l'élément de réception (5), et
au-dessus de la poche d'encliquetage (14) il est prévu une rainure de dégagement (13) s'étendant verticalement en continu jusqu'à une couronne (21) du boulon de réglage (4) qui reçoit l'élément d'encliquetage (11) à l'état de montage, une barrière en forme de rampe (12) étant prévue entre la poche d'encliquetage (14) et la rainure de dégagement (13).

2. Dispositif conforme à la revendication 1,
**caractérisé en ce que**
le boulon de réglage (4) comporte au moins une surface de clef plane (20) faisant office de sécurité anti-rotation.

3. Dispositif conforme à l'une des revendications 1 et 2,
**caractérisé en ce que**
la surface d'appui (8) de l'élément de réglage (4) est conçue pour s'appliquer ou s'appuyer sur le second composant d'appui (3).

4. Dispositif conforme à l'une des revendications 1 à 3,
**caractérisé en ce que**
la barrière en forme de rampe (12) a un angle de rampe d'environ 45°.

5. Dispositif conforme à l'une des revendications 1 à 4,
**caractérisé en ce qu'**
il est prévu une sécurité anti-enfoncement du boulon de réglage (4) dans la mesure où le diamètre de la couronne (21) de ce boulon de réglage (4) ou le diamètre de la tête de l'élément de fixation (7) est supérieur au diamètre interne du perçage traversant (9) de l'élément de réception (5).

6. Dispositif conforme à l'une des revendications 1 à 5,
**caractérisé en ce que**
l'élément de réception (5) et également l'élément de réglage (4) sont réalisés en un matériau synthétique thermoplastique.

7. Dispositif conforme à l'une des revendications 1 à 6,
**caractérisé en ce que**
l'élément de fixation (7) est réalisé sous la forme d'une vis de fixation (7).

8. Dispositif conforme à la revendication 7,
**caractérisé en ce que**
la vis de fixation (7) est une vis métallique avec un filetage réalisé en matériau synthétique ou à pas métrique, la pointe de la vis de fixation (7) étant réalisée sans filetage sous la forme d'une pointe d'aiguille.

9. Dispositif conforme à l'une des revendications 1 à 8,
**caractérisé en ce que**
le blocage entre la surface d'appui (8) et le composant d'appui (3) est augmenté par des moyens adaptés.

10. Dispositif conforme à l'une des revendications 1 à 9,
**caractérisé en ce que**
le premier composant (2) à supporter et le second composant d'appui (3) sont respectivement des composants de carrosserie d'un véhicule automobile.

11. Dispositif conforme à la revendication 10,
**caractérisé en ce que**
le premier composant (2) à supporter est une grille de radiateur (15, 18) tandis que le second composant d'appui (3) est un support de pare-choc (16).

12. Dispositif conforme à la revendication 8,
**caractérisé en ce que**
le premier composant (2) à supporter est un pare-choc pouvant être combiné à une grille de protection de radiateur.
